# EUROPEAN PATENT SPECIFICATION

(11) **EP 4 280 362 B1**
(45) Date of publication and mention of the grant of the patent: **22.10.2025**
(21) Application number: 22917859.5
(22) Date of filing: 07.01.2022
(51) Int. Cl.: H01M 50/262, H01M 50/269, H01M 4/13

(54) **BATTERY, ELECTRIC DEVICE, AND MANUFACTURING METHOD FOR BATTERY**
BATTERIE, ELEKTRISCHE VORRICHTUNG UND HERSTELLUNGSVERFAHREN FÜR DIE BATTERIE
BATTERIE, DISPOSITIF ÉLECTRIQUE ET PROCÉDÉ DE FABRICATION DE BATTERIE

(43) Date of publication of application: 22.11.2023
(73) Proprietor: Contemporary Amperex Technology (Hong Kong) Limited, Central, Central And Western District (HK)
(72) Inventor: ZHU, Hao, Ningde, Fujian 352100 (CN); GAO, Jiajing, Ningde, Fujian 352100 (CN); ZHANG, Yimou, Ningde, Fujian 352100 (CN); LIN, Weilong, Ningde, Fujian 352100 (CN); WANG, Wei, Ningde, Fujian 352100 (CN)
(74) Representative: Ziebig Hengelhaupt Intellectual Property Attorneys Patentanwaltskanzlei PartGmbB
(86) International application number: PCT/CN2022/070830
(87) International publication number: WO 2023/130387

(56) References cited:
- WO-A1-2007/028803
- WO-A1-2007/028803
- CN-U- 201 946 706
- CN-U- 205 985 210
- CN-U- 205 985 210
- CN-U- 208 596 757
- JP-A- 2003 134 679
- US-A- 5 998 060
- US-A- 5 998 060

## Description

### Technical Field

The present application relates to the technical field of batteries, and in particular to a battery, a power consuming device, and a method for manufacturing a battery.

### Background Art

Energy conservation and emissions reduction are keys to the sustainable development of the automobile industry. In this context, electric vehicles play an important part in the sustainable development of the automobile industry because of their advantages in energy conservation and environmental protection. Further, for the electric vehicles, the battery technology is an important factor to their development.

In the development of the battery technology, the connection and grouping technology between battery cells is of great significance for optimizing battery performance and improving production efficiency. Therefore, it is one of the important topics for research and development. Relevant prior art is document WO 2007/028803 A1 which shows a battery arrangement.

### Summary of the Invention

The present application is completed in view of the above topic. An objective of the present application is to provide a battery, a power consuming device including the battery, and a method for manufacturing a battery that can improve production efficiency of the battery and is conducive to miniaturization and lightweight of the battery.

Another objective of the present application is to provide a battery, a power consuming device including the battery, and a method for manufacturing a battery that can easily adjust the number of battery cells in groups according to actual usage.

Yet another objective of the present application is to provide a battery, a power consuming device including the battery, and a method for manufacturing a battery that can ensure that terminal posts between batteries are seamlessly connected.

In order to achieve at least any one of the above objectives, a first aspect of the present application provides a battery. The battery includes two or more battery cells arranged in a first direction, where one of a cathode and an anode of each of the battery cells is configured with a first snap-fit body, the other one of the cathode and the anode of each of the battery cells is configured with a second snap-fit body, the first snap-fit body of one of any two adjacent battery cells is snap-fit to the second snap-fit body of the other one of the any two adjacent battery cells, and movement of the battery cells connected by snap-fitting the first snap-fit body to the second snap-fit body in the first direction is limited.

Thus, since the adjacent battery cells are connected to each other by snap-fitting the first snap-fit body to the second snap-fit body, compared with the manner of connecting the battery cells by using electrical connectors, production efficiency of the battery is improved, the number of components used is reduced, and miniaturization and lightweight of the entire battery are facilitated.

Moreover, since the battery cells can be connected only by snap-fitting the battery cells arranged adjacent to each other in the first direction, the number of the battery cells can be easily increased or decreased according to actual usage, such that battery grouping is simple and flexible.

Further, since movement of the battery cells connected by snap-fitting in the first direction is limited, it is unnecessary to worry about poor connection caused by a gap formed between terminal posts of the battery cells connected. When the battery cells are grouped, after the first snap-fit body is snap-fit to the second snap-fit body, it is only necessary to support the battery cell, so as to carry out subsequent procedures such as welding. Manufacturing is simple, and connection reliability between the battery cells is high.

According to the invention each of the battery cells has a battery cell body, and the cathode and the anode arranged at opposite ends of the battery cell body, respectively.

Since the cathode and the anode of the battery cell are located at two ends of the battery cell body, respectively, it is convenient to snap-fit the cathodes and the anodes of the adjacent battery cells, such that two or more battery cells are conveniently snap-fit to each other.

According to the invention the cathode and the anode are each configured with a boss portion arranged on the battery cell body, the first snap-fit body and the second snap-fit body are integrally connected to the corresponding boss portions, respectively, the boss portion connected to the first snap-fit body is a first boss portion, and the boss portion connected to the second snap-fit body is a second boss portion.

Since a terminal post of the cathode or the anode includes the boss portion and a snap-fit body, it can be ensured that there is a sufficient contact area when the cathode is snap-fit to the anode, and large overcurrent requirements can be satisfied while reliable electrical connection can be ensured.

In any implementation, the first snap-fit body is formed into a shape of a protruding strip with a cross section formed in a widening manner as the first snap-fit body extends away from the battery cell body; and the second snap-fit body is formed into a shape of a groove capable of being snap-fit to the first snap-fit body in a manner of surface contact.

Thus, the first snap-fit body and the second snap-fit body form a structure in which a trapezoidal strip block matches a dovetail-shaped strip groove. Thus, movement of the two battery cells connected towards a direction of separation from each other in the first direction can be limited. Moreover, misalignment of the two battery cells can also be suppressed, and the function of reliable connection and limiting are further achieved.

In any implementation, in a state in which the first snap-fit body of one of the any two adjacent battery cells is snap-fit to the second snap-fit body of the other one of the any two adjacent battery cells, the first boss portion and the second boss portion are maintained in surface contact with each other in a state in which the first snap-fitting portion is snap-fit to the second snap-fitting portion.

Since in a snap-fit state, the first boss portion and the second boss portion are maintained in surface contact with each other, large overcurrent requirements can be satisfied while reliable electrical connection is ensured.

In any implementation, a welding portion formed by welding is arranged at a seam between the first boss portion and the second boss portion.

Since the seam between the first boss portion and the second boss portion in surface contact with each other is welded, the battery cells connected to each other can be relatively positioned, and connection between the battery cells can be ensured. Moreover, since sufficient connection strength can be provided only by welding the seam between two boss portions of the terminal post of the cathode and the terminal post of the anode, welding operation is simple, and connection strength between the battery cells can be improved.

In any implementation, the first snap-fit body is formed to have: a first rising portion arranged in a rising manner relative to the first boss portion, one end of the first rising portion being integrally connected to the first boss portion; and a first bent portion arranged at the other end of the first rising portion in a bent manner relative to the first rising portion, a first accommodation space into which the second snap-fit body is inserted being formed between the first bent portion and the first boss portion. The second snap-fit body is formed to have: a second rising portion arranged in a rising manner relative to the second boss portion, one end of the second rising portion being integrally connected to the second boss portion; and a second bent portion arranged at the other end of the second rising portion in a bent manner relative to the second rising portion, a second accommodation space into which the first snap-fit body is to be inserted being formed between the second bent portion and the second boss portion.

By means of the first snap-fit body and the second snap-fit body formed above, the cathode and the anode of the adjacent battery cells can be snap-fit to each other in a manner of close surface contact without being easily separated or misaligned. Connection strength between the battery cells can be ensured to some extent even in a state in which welding is not carried out. In addition, a contact area between the terminal post of the cathode and the terminal post of the anode can also be increased.

In any implementation, the first rising portion is formed by part of a peripheral wall of a cylindrical body with the first boss portion as a bottom surface, and the second rising portion is formed by a remaining part of the peripheral wall of the cylindrical body.

Thus, the first rising portion, the first boss portion, the second rising portion and the second boss portion after snap-fitting form a cylindrical body together, such that improvement in connection strength is facilitated, and welding of the seam is facilitated.

In any implementation, the first bent portion and the second bent portion each have a shape of a plate having a uniform thickness.

Thus, the snap-fit body is easy to process.

In any implementation, the first bent portion is formed as a plate of which a thickness gradually reduces as the first bent portion extends away from the first rising portion; and the second bent portion is formed as a plate of which a thickness gradually reduces as the second bent portion extends away from the second rising portion.

Thus, since the first bent portion and the second bent portion are formed into the shape of the plate having a thin end and a thick end, the first bent portion and the second bent portion can be easily snap-fit together without special positioning or guiding when matching each other, and a contact area between the terminal post of the cathode and the terminal post of the anode between the battery cells connected can be further increased.

In any implementation, in a state in which the first snap-fit body of one of the any two adjacent battery cells is snap-fit to the second snap-fit body of the other one of the any two adjacent battery cells, the first bent portion is inserted into the second accommodation space, the second bent portion is inserted into the first accommodation space, the first boss portion and the second bent portion are maintained in surface contact with each other, and the second boss portion and the first bent portion are maintained in surface contact with each other.

Thus, in a snap-fit state, the terminal post of the cathode and the terminal post of the anode connected can be in a cylindrical body as a whole, such that subsequent welding is facilitated; and moreover, the terminal post of the cathode and the terminal post of the anode connected have a large contact area such that reliable electrical connection can be ensured, and large overcurrent requirements can be satisfied.

In any implementation, welding portions formed by welding are arranged at a seam between the first boss portion and the second snap-fit body and at a seam between the second boss portion and the first snap-fit body.

Thus, it is only necessary to weld peripheries of the terminal post of the cathode and the terminal post of the anode connected in a circumferential direction. Welding operation is simple, and has short time consumption, thereby being conducive to improvement in production efficiency of the battery.

In any implementation, the boss portion, the first snap-fit body and the second snap-fit body is made of at least any one of aluminum metal, copper metal, nickel plated aluminum metal, silver plated aluminum metal, nickel plated copper metal, and silver plated copper metal.

The terminal post of the cathode and the terminal post of the anode including the boss portion and the snap-fitting bodies are formed by a material having high conductivity, thereby being conducive to improvement in conductivity and an overcurrent capability of the electrode.

In any implementation, two ends of the battery cell body in the first direction are each provided with an explosion-proof valve openable under an action of a pressure of gas inside the battery cell, and the adjacent explosion-proof valves are arranged staggered from each other in location.

Since the first snap-fit body and the second snap-fit body are arranged at two ends of the battery cell body, respectively, configuration positions of the explosion-proof valves can be easily determined by using these snap-fitting bodies as references, and thus positions of the explosion-proof valves in the snap-fit state can be easily figured out. The explosion-proof valves on end surfaces opposite each other in the snap-fit state are in staggered positions such that the situation that one of the explosion-proof valves explodes due to thermal runaway and unintentionally causes the explosion-proof valve located on an opposite side to explode can be avoided.

A second aspect of an embodiment of the present application provides a power consuming device. The power consuming device includes a battery according to the first aspect of the embodiment of the present application.

Since miniaturization and lightweight of the battery can be achieved, miniaturization and lightweight of the power consuming device can also be achieved; and the number of the battery cells in groups can also be easily adjusted according to actual usage. Further, since connection reliability between the battery cells is improved, reliability of the battery and the power consuming device is improved.

A third aspect of an embodiment of the present application provides a method for manufacturing a battery. The battery is a battery according to the first aspect of the embodiment of the present application. The method for manufacturing a battery includes: arranging two or more battery cells in a first direction, and snap-fitting a first snap-fit body of one of any two adjacent battery cells to a second snap-fit body of the other one of the any two adjacent battery cells; and welding a seam at a periphery of a snap-fit structure along the periphery of the snap-fit structure formed by snap-fitting the first snap-fit body to the second snap-fit body.

Thus, connection strength between the battery cells connected can be ensured. Moreover, even if there are no special steps for checking misalignment or removal of the terminal post of the cathode and the terminal post of the anode in a manufacturing process, welding can be easily carried out. Moreover, since the seam is welded, a welding process is simple.

By means of the above embodiments of the present application, the battery, the power consuming device including the battery, and the method for manufacturing a battery that at least have one of the following effects can be implemented:
production efficiency of the battery can be improved, and miniaturization and lightweight of the battery are facilitated;
the number of the battery cells in groups can be easily adjusted according to actual usage; and
it can be ensured that the cathode and the anode between the batteries are tightly attached, such that the terminal post of the cathode and the terminal post of the anode are seamlessly connected.

### Brief Description of the Drawings

FIG. 1 is a schematic structural diagram illustratively showing a vehicle according to an embodiment of the present application.
FIG. 2 is a schematic side view illustratively showing a battery cell according to an embodiment of the present application.
FIG. 3 is a schematic solid diagram illustratively showing a structure of a battery cell according to an embodiment of the present application.
FIG. 4 is a schematic side view illustratively showing a structure of a battery according to an embodiment of the present application.
FIG. 5 is a schematic side view illustratively showing a battery cell according to another embodiment of the present application.
FIG. 6 is a schematic side view illustratively showing a battery cell according to another embodiment of the present application from another viewing angle.
FIG. 7 is a schematic solid diagram illustratively showing a battery cell according to another embodiment of the present application.
FIG. 8 is a schematic side view illustratively showing a structure of a battery according to another embodiment of the present application.
FIG. 9 is a schematic solid diagram illustratively showing a structure of a battery according to another embodiment of the present application.
FIG. 10 is a schematic side view illustratively showing a structure of a battery cell according to yet another embodiment of the present application.
FIG. 11 is a schematic solid diagram illustratively showing a structure of a battery cell according to yet another embodiment of the present application.
FIG. 12 is a schematic side view illustratively showing a structure of a battery according to yet another embodiment of the present application.
FIG. 13 is a schematic solid diagram illustratively showing a structure of a battery according to yet another embodiment of the present application.
FIG. 14 is a flowchart of steps illustratively showing a method for manufacturing a battery according to an embodiment of the present application.

### List of reference numerals:

1-vehicle; 10-battery; 11-controller; 12-motor;
100, 200, 300-battery cell; 101, 201, 301-battery cell body; 102, 202, 302-cathode (terminal post of cathode); 103, 203, 303-anode (terminal post of anode); 104, 204, 304-first boss portion; 105, 205, 305-second boss portion; 106, 206, 306-first snap-fit body; 107, 207, 307-second snap-fit body; 108, 208, 308-seam; 208a, 308a-seam body between first boss portion and second snap-fit body; 208b, 308b-seam body between second boss portion and first snap-fit body; 208c, 308c-seam body between first snap-fit body and second snap-fit body; 209, 309-first rising portion; 210, 310-second rising portion; 211, 311-first bent portion; 212, 312-second bent portion; 213, 313-first accommodation space; 214, 314-second accommodation space; and 115-explosion-proof valve.

### Detailed Description of Embodiments

Specific implementations of the present application will be described in detail below with reference to the accompanying drawings. The accompanying drawings are only used to illustrate preferred embodiments of the present application, and should not be considered to limit the present application. Throughout the accompanying drawings, the same reference numerals represent the same components or elements.

By reading the detailed description of the implementations in the following text, the advantages and benefits of the present application will become clear to those of ordinary skill in the art. The following embodiments are only used to illustrate the technical solution of the present application, are therefore exemplary and do not limit the scope of protection required by the present application.

It should be noted that unless otherwise stated, technical terms or scientific terms used herein shall have the ordinary meanings as understood by those skilled in the pertinent field to which the embodiments of the present application belongs.

In the description of the embodiments of the present application, the orientation or position relationship indicated by the technical terms "central", "longitudinal", "transverse", "length", "width", "thickness", "upper", "lower", "front"; "rear", "left", "right", "top", "bottom", "inner", "outer", etc. are based on the orientation or position relationship shown in the accompanying drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In addition, in the description of the embodiments of the present application, the phrase "a plurality of" means two or more, unless otherwise explicitly and specifically defined.

In the description of the embodiments of the present application, unless otherwise explicitly specified and defined, the technical terms such as "mounting", "connecting", "connection", "fixing", etc. should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

In the description of the embodiments of the present application, unless otherwise explicitly specified and defined, a first feature being "above" or "below" a second feature may be direct contact between the first feature and the second feature, or indirect contact between the first feature and the second feature by means of an intermediate medium. Moreover, the first feature being "on", "above", and "over" the second feature may be the first feature being directly above or obliquely above the second feature, or simply mean that the first feature is at a higher level than the second feature. The first feature being "under", "below" and "underneath" the second feature may be the first feature being right below or obliquely below the second feature, or only means that the level height of the first feature being less than that of the second feature.

In battery manufacturing such as a secondary battery, there is a procedure of connecting a plurality of battery cells in series to form a battery pack. In the related art, the plurality of battery cells are typically arranged in the same orientation, and then are welded to terminal posts on the same side of each battery cell by means of busbars connected in series. During welding, there is a situation in which heights of battery cells are not completely consistent, resulting in poor contact between terminal posts and the busbars connected in series, resulting in poor welding and an insufficient overcurrent capability.

In addition, when the battery cell is a cylindrical cell, if the cylindrical battery cell is connected in an axial direction, it is necessary to position the cylindrical cell axially and circumferentially. There is the problem of difficult positioning. If positioning is poor, weld seam deviation and poor welding may be caused.

Further, for the cylindrical battery cell, it is difficult to determine location orientation of an explosion-proof valve in a terminal post area. Therefore, if two adjacent explosion-proof valves are in a location in which weak portions face each other, there is a situation in which one of the explosion-proof valves unintentionally causes the other explosion-proof valve facing the explosion-proof valve to explode, resulting in failure of the adjacent battery cells.

On the basis of the above various problems, the inventor of the present application designs a battery, and a method for manufacturing a battery that can reduce the risk of poor welding, facilitate mutual location between the battery cells, and facilitate design of the locations of the explosion-proof valves.

The battery to which the present application relates may be any battery, such as a battery module and a battery pack, or a primary battery and a secondary battery. For example, the secondary battery includes a nickel-metal hydride battery, a nickel-cadmium battery, a lead-acid (or lead storage) battery, a lithium ion battery, a sodium ion battery, a polymer battery, etc. Such a battery is suitable for various power consuming apparatuses using a battery, such as mobile phones, portable apparatuses, laptops, battery cars, electric toys, electric tools, electric vehicles, ships and spacecraft. For example, the spacecrafts include airplanes, rockets, space shuttles, space vehicles, etc.; and the battery is configured to provide electrical energy for the power consuming apparatus described above.

It should be understood that the technical solutions described in the embodiments of the present application are not only limitedly suitable for the battery and the power consuming device described above, but can also be suitable for all batteries and power consuming apparatuses using the batteries. However, for the sake of simplicity, the following embodiments are all described with electric vehicles as examples. However, it is evident that application scenarios of the batteries and the power consuming apparatuses to which the embodiments of the present application relate are not limited to the electric vehicles.

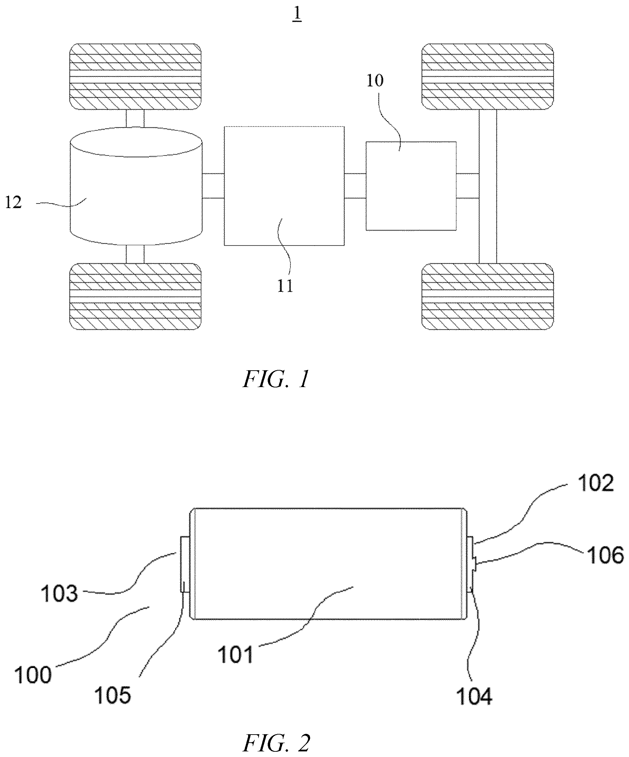

FIG. 1 is a schematic structural diagram of a vehicle 1 to which an embodiment of the present application relates. As shown in FIG. 1, the vehicle 1 may be a fuel oil automobile, a fuel gas automobile or a new energy automobile, and the new energy automobile may be a pure electric vehicle, a hybrid electric automobile or an extended range automobile. A battery 10 is arranged inside the vehicle 1, and the battery 10 may be arranged at a bottom, a head or a tail of the vehicle 1. The battery 10 may be configured to energize the vehicle 1. For example, the battery 10 may be used as an operating power source of the vehicle 1. The vehicle 1 may further include a controller 11 and a motor 12. The controller 11 is configured to control the battery 10 to energize the motor 12. For example, the controller may be configured to start, navigate and drive the vehicle 1.

In some embodiments of the present application, the battery 10 may not only be used as an operating power source for the vehicle 1, but serve as a driving power source for the vehicle 1, replacing or partially replacing fuel or natural gas to provide driving power for the vehicle 1.

In order to satisfy different electricity requirements, the battery 10 may include a plurality of battery cells 100. The battery cell 100 refers to a minimum unit that constitutes a battery module or battery pack. The plurality of battery cells 100 may be connected in series and/or in parallel through electrode terminals (hereinafter referred to as "terminal posts") for various applications. The battery involved in the present application may include a battery module or a battery pack. The plurality of battery cells 100 may be connected in series or in parallel or in a hybrid manner. The hybrid connection means a mixture of serial connection and parallel connection. The plurality of battery cells 100 may directly form the battery 10 in the embodiment of the present application, or may form the battery module, and then the battery module forms the battery. In addition, in the embodiment of the present application, the battery including the plurality of battery cells connected in series are described as an example. However, those skilled in the art should be aware that the battery in the embodiment of the present application is not limited to the "series" connection mode.

The battery 10 in the embodiment of the present application may include an enclosure accommodating the battery cells 100. The enclosure accommodates the battery cells 100 to reduce the impact of external vibration or shock on the battery cells 100, and to prevent liquids or other foreign objects from affecting the performance of the battery cells 100. A material of the enclosure may be alloy materials such as aluminum alloy and ferroalloy, or polymer materials such as polycarbonate and polyisocyanurate foam plastic, or composite materials such as glass fiber and epoxy resin, which is not limited in the embodiment of the present application.

In some embodiments, the battery cell 100 may be a lithium ion battery, a sodium-ion battery, a magnesium ion battery, etc., which is not limited in the embodiments of the present application. The battery cell 100 may be in cylinder, flat body, rectangular cuboid or other shapes, which is not limited in the embodiment of the present application. The battery cells 100 are generally divided into three types according to packaging modes: cylindrical battery cells, square battery cells, and soft pack battery cells, which are not limited in the embodiments of the present application. According to a cross-sectional shape of a cylindrical surface, the cylindrical battery cells may be further divided into cylindrical battery cells, polygonal prismatic battery cells, etc. However, for the sake of simplicity, the following embodiments are described with the cylindrical battery cell 100 as an example.

In addition, although the battery cell is not specifically illustrated, the battery cell 100 in the embodiment of the present application typically includes an end cap, a shell, and a battery core assembly.

The end cap refers to a component that covers an opening of the shell to isolate an internal environment of the battery cell 100 from an external environment. Unlimitedly, the shape of the end cap may be adapted to the shape of the shell to fit the shell. Alternatively, the end cap may be made of a material having hardness and strength (such as aluminum alloy) to some extent, such that the end cap is not likely to deformation during compression and collision, the battery cell 100 may have higher structural strength, and safety performance may also be improved. Functional components such as electrode terminals may be arranged on the end cap. The electrode terminal may be configured to be electrically connected to the battery core assembly, so as to output electrical energy of the battery cell 100 or input the electrical energy to the battery cell 100. A material of the end cap may also be various, such as copper, iron, aluminum, stainless steel, aluminum alloy and plastic, which is not specifically limited in the embodiment of the present application. In some embodiments, an insulator may further be arranged on an inner side of the end cap. The insulator may be configured to isolate electrical connection components in the shell from the end cap, so as to reduce the risk of a short circuit. Exemplarily, the insulator may be plastic, rubber, etc.

The shell is an assembly configured to match the end cap, so as to form an internal environment of the battery cell 100. The formed internal environment may be configured to accommodate the battery core assembly, electrolyte (not shown in the figure), and other components. The shell and the end cap may be independent components. An opening may be provided on the shell, and the end cap covers the opening of the end cap at the opening, so as to form an internal environment in the battery cell. Unlimitedly, it is also possible to integrate the end cap and the shell. Specifically, the end cap and the housing may form a common connection surface before other components enter the shell. When it is necessary to encapsulate an interior of the shell, the end cap covers the shell. The shell may be of various shapes and sizes, such as rectangle, cylinder and hexagonal prism. Specifically, a shape of the shell may be determined according to the specific shape and size of the battery core assembly. A materials of the shell may be various, such as copper, iron, aluminum, stainless steel, aluminum alloy and plastic, which is not specially limited in the embodiment of the present application. Since the cylindrical battery cell 100 is described as an example in the embodiment of the present application, the shell of the battery cell 100 is, for example, cylindrical.

The battery core assembly is a component in the battery cell 100 that undergoes an electrochemical reaction. The shell may include one or more battery core assemblies. The battery core assembly is mainly formed by winding or stacking a positive plate and a negative plate, and is typically provided with a diaphragm between the positive plate and the negative plate. Parts of the positive plate and the negative plate that contain active substances form a main body of the battery core assembly, and parts of the positive plate and the negative plate that do not contain active substances each form a battery tab (not shown in the figure). A positive battery tab and the negative battery tab may be jointly located at one end of the main body together or at two ends of the main body, respectively. In a charging and discharging process of the battery, a positive active substance and a negative active substance react with electrolyte, and the battery tab is connected to the electrode terminal to form a current circuit.

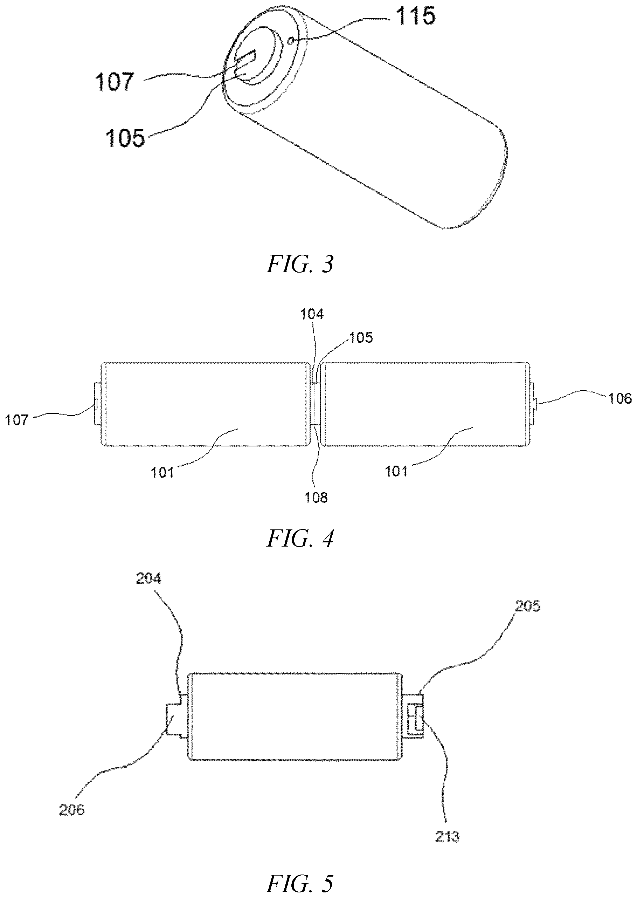

FIGs. 2 and 3 illustratively show a structure of a battery cell according to an embodiment of the present application. FIG. 4 illustratively shows a structure of a battery according to an embodiment of the present application. As shown in FIGs. 2-4, the battery includes two or more battery cells 100 arranged in a first direction, where one of a cathode 102 and an anode 103 of each of the battery cells 100 is configured with a first snap-fit body 106, the other one of the cathode 102 and the anode 103 of each of the battery cells 100 is configured with a second snap-fit body 107, the first snap-fit body 106 of one of any two adjacent battery cells 100 is snap-fit to the second snap-fit body 107 of the other one of the any two adjacent battery cells 100, and movement of the battery cells 100 connected by snap-fitting the first snap-fit body 106 to the second snap-fit body 107 in the first direction is limited.

The first direction herein in the embodiment of the present application refers to a direction in which the cathode and the anode of the battery are connected to each other and sequentially arranged; and with the cylindrical battery cell of the present application as an example, the first direction is an axial direction of a cylinder. Specifically, in FIG. 4, the first direction is a left-right direction in FIG. 4.

The cathode 102 and the anode 103 of the battery cell 100 can be freely arranged on two end surfaces of the battery cell 100. For convenience of description, in examples of FIGs. 2-4, a terminal post shown by reference numeral 102 is used as a cathode (which is also referred to as the terminal post of the cathode), and a terminal post shown by reference numeral 103 is used as an anode (which is also referred to as the terminal post of the anode). Of course, it is also possible to use the terminal post shown by reference numeral 102 as the anode and the terminal post shown by reference numeral 103 as the cathode.

The cathode 102 may have a first snap-fit body 106 or a second snap-fit body 107, and the anode 103 may have a second snap-fit body 107 or a first snap-fit body 106. For convenience of description, the cathode 102 having the first snap-fit body 106, and the anode 103 having the second snap-fit body 107 are described as examples.

When the first snap-fit body 106 shown in FIG. 2 and the second snap-fit body 107 shown in FIG. 3 are snap-fit to each other together, two battery cells are snap-fit to each other as shown in FIG. 4. In this case, movement of the two battery cells connected in the first direction is limited. That is, the two battery cells cannot be separated from each other in the first direction under an action of the first snap-fit body 106 and the second snap-fit body 107.

Thus, since the adjacent battery cells 100 are connected to each other by snap-fitting the first snap-fit body 106 to the second snap-fit body 107, compared with the manner of connecting the battery cells by using electrical connectors, production efficiency of the battery is improved, the number of components used is reduced, and miniaturization and lightweight of the entire battery are facilitated.

Moreover, since the battery cells can be connected only by snap-fitting the battery cells 100 arranged adjacent to each other in the first direction, the number of the battery cells can be easily increased or decreased according to actual usage, such that battery grouping is simple and flexible. For example, when more battery cells are needed, more battery cells 100 may be connected to an end of a battery cell group that has been snap-fit by snap-fitting the first snap-fit body 106 to the second snap-fit body 107.

Further, since movement of the battery cells connected by snap-fitting in the first direction is limited, it is unnecessary to worry about poor connection caused by a gap formed between terminal posts of the battery cells connected. When the battery cells are grouped, after the first snap-fit body is snap-fit to the second snap-fit body, it is only necessary to support the battery cell, so as to carry out subsequent procedures such as welding. Manufacturing is simple, and connection reliability between the battery cells is high.

In any implementation, each of the battery cells 100 has a battery cell body 101, and the cathode 102 and the anode 103 arranged at opposite ends of the battery cell body 101, respectively.

A structure of the battery cell 100 herein is divided for convenience of description, and does not conflict with other structural and/or functional divisions of the battery or the battery cell.

The cathode 102 and the anode 103 are preferably arranged at positions opposite each other across the battery cell body 101. That is, the cathode and the anode are substantially in a position of coincidence when viewed in an axial direction.

In addition, the cathode 102 and the anode 103 preferably have substantially the same outer contour when viewed in the axial direction.

The cathode 102 and the anode 103 may be made of any material having specified conductivity and an overcurrent capability. For example, aluminum metal, copper metal, or nickel or silver plated aluminum metal or copper metal may be used.

Since the cathode 102 and the anode 103 of the battery cell 101 are located at two ends of the battery cell body 101, respectively, it is convenient to snap-fit the cathodes 102 and the anodes 103 of the adjacent battery cells 101, thereby conveniently snap-fitting two or more battery cells to each other.

In any implementation, as shown in FIGs. 2 and 3, the cathode 102 and the anode 103 are each configured with a boss portion 104, 105 arranged on the battery cell body 101, the first snap-fit body 106 and the second snap-fit body 107 are integrally connected to the corresponding boss portions 104, 105, respectively, the boss portion connected to the first snap-fit body 106 is a first boss portion 104, and the boss portion connected to the second snap-fit body 107 is a second boss portion 105.

Thus, it may be seen that the cathode 102 of the battery as a whole includes the first boss portion 104 located on one end surface of the battery cell body 101 and the first snap-fit body 106 integrated with the first boss portion 104. From FIG. 2, it may be seen that the first snap-fit body 106 is formed in a protruding manner relative to the first boss portion 104.

The anode 103 of the battery as a whole includes a second boss portion 103 located on the other end surface of the battery cell body 101 and the second snap-fit body 107 integrated with the second boss portion 105. From FIG. 3, it may be seen that a surface of the second snap-fit body 107 is recessed relative to the second boss portion 105. Thus, after the first snap-fit body 106 is inserted into the second snap-fit body 107 and snap-fit, the two boss portions 104, 105 can be in surface contact with each other.

There are no special limitations for the shape and size of the first boss portion 104 and the second boss portion 105. In the embodiment, as an example, both the first boss portion 104 and the second boss portion 105 are formed into cylindrical shapes, and have a diameter that does not exceed an outer diameter of the battery cell body 101. A thickness may be set according to actual requirements.

In addition, formation lengths of the first snap-fit body 106 and the second snap-fit body 107 are not specifically limited as long as the snap-fit can be achieved. However, the second snap-fit body 107 is formed as shown in FIG. 3. That is, a shape of a groove having only one open end is formed, thereby being conducive to more reliable limitations for a location of the first snap-fit body 106, and further more reliably limiting a relative position between the two battery cells 100, such that deviation of the two battery cells in a radial direction of a cylinder can be limited from more directions.

Since a terminal post of the cathode 102 or the anode 103 includes the boss portion 104, 105 and a snap-fit body 106, 107, it can be ensured that there is a sufficient contact area when the cathode is snap-fit to the anode, and large overcurrent requirements can be satisfied while reliable electrical connection can be ensured.

In any implementation, as shown in FIG. 2, the first snap-fit body 106 is formed into a shape of a protruding strip with a cross section formed in a widening manner as the first snap-fit body 101 extends away from the battery cell body; and as shown in FIG. 3, the second snap-fit body 107 is formed into a shape of a groove capable of being snap-fit to the first snap-fit body 106 in a manner of surface contact.

Thus, as shown in FIG. 2 and FIG. 3, the first snap-fit body 106 and the second snap-fit body 107 form a structure in which a trapezoidal strip block matches a dovetail-shaped strip groove. Thus, movement of the two battery cells connected towards a direction of separation from each other in the first direction can be limited. Moreover, misalignment of the two battery cells can also be suppressed, and the function of reliable connection and limiting are further achieved.

An example of the structure in which the trapezoidal strip block matches the dovetail-shaped strip groove is provided. Other structures capable of matching each other to limit movement in the first direction may also be provided. For example, the first snap-fit body 106 is T-shaped, and the second snap-fit body 107 is a shape of a groove having a groove space having a T-shaped cross section.

In any implementation, as shown in FIG. 4, in a state in which the first snap-fit body 106 of one of the any two adjacent battery cells is snap-fit to the second snap-fit body 107 of the other one of the any two adjacent battery cells, the first boss portion 104 and the second boss portion 105 are maintained in surface contact with each other in a state in which the first snap-fitting portion 106 is snap-fit to the second snap-fitting portion 107.

Specifically, in the state in which the first snap-fitting portion 106 is snap-fit to the second snap-fitting portion 107, the first boss portion 104 and the second boss portion 105 form corresponding top surfaces that abut against each other to be in surface contact with each other. In addition, an outer contour surface of the first snap-fit body 106 also makes contacts with a contour surface of a groove space of the second snap-fitting portion 107.

Since in a snap-fit state, the first boss portion 104 and the second boss portion 105 are maintained in surface contact with each other, large overcurrent requirements can be satisfied while reliable electrical connection is ensured.

In any implementation, as shown in FIG. 4, a welding portion formed by welding is arranged at a seam between the first boss portion and the second boss portion.

As shown in FIG. 4, the cathode of the battery cell on a left side and the anode of the battery cell on a right side are snap-fit to each other to form a battery terminal post connector, and a seam 108 is formed on the battery terminal post connector. By performing welding along the seam 108, relative positions of the two battery cells may be fixed.

With regard to welding, for example, a seam welding process may be used. In addition, a welding area is designed according to strength of the battery and operating conditions of the battery. For example, welding may be performed along an entire circumference of the seam 108 or locally along the seam 108.

Since the seam 108 between the first boss portion 104 and the second boss portion 105 in surface contact with each other is welded, the battery cells connected to each other can be relatively positioned, and connection between the battery cells can be ensured. Moreover, since sufficient connection strength can be provided only by welding the seam between two boss portions of the terminal post of the cathode and the terminal post of the anode, welding operation is simple, and connection strength between the battery cells can be improved.

In any implementation, the snap-fit structure may further use a structure as shown in FIGs. 5-9. Specifically, the first snap-fit body 206 is formed to have: a first rising portion 209 arranged in a rising manner relative to the first boss portion 204, one end of the first rising portion 209 being integrally connected to the first boss portion 204; and a first bent portion 211 arranged at the other end of the first rising portion 209 in a bent manner relative to the first rising portion 209, a first accommodation space 213 into which the second snap-fit body 207 is inserted being formed between the first bent portion 211 and the first boss portion 204. The second snap-fit body 207 is formed to have: a second rising portion 210 arranged in a rising manner relative to the second boss portion 205, one end of the second rising portion 210 being integrally connected to the second boss portion 205; and a second bent portion 212 arranged at the other end of the second rising portion 210 in a bent manner relative to the second rising portion 210, a second accommodation space into which the first snap-fit body 206 is to be inserted being formed between the second bent portion 212 and the second boss portion 205.

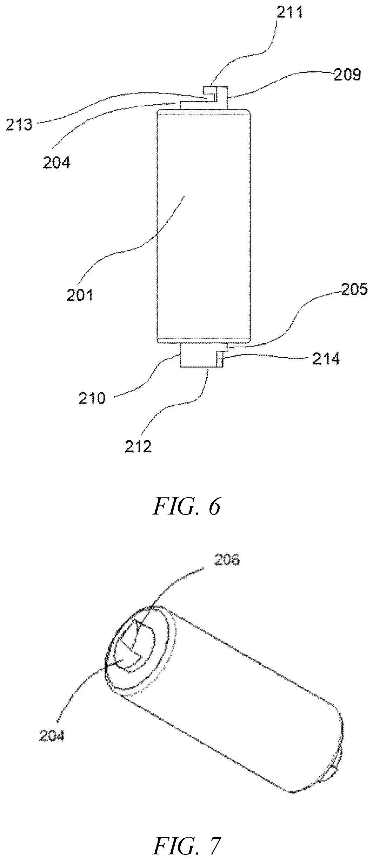

As shown in FIGs. 5 and 6, a first snap-fit body 206 has a first rising portion 209. The first rising portion 209 is, for example, part of a peripheral wall of a cylinder body with a first boss portion 204 as a bottom surface, and a peripheral surface of the first rising portion 209 and a peripheral surface of the first rising portion 204 are continuous and are located on the same arc surface. In the embodiment, the first rising portion 209 rises in a roughly perpendicular manner relative to the first boss portion 204. A first bent portion 211 is integrally arranged at one end of the first rising portion 209 away from the battery cell body 101. As shown in FIG. 6, when viewed from a side surface, a first bent portion 211 and a first rising portion 209 as a whole are in an inverted L shape, and the first bent portion 211 has a length less than a contour size of a first boss portion 204. As shown in FIG. 7, a first bent portion 211 is fan-shaped when viewed in an axial direction.

A second snap-fit body 207 has a second rising portion 210. The second rising portion 210 is, for example, part of a peripheral wall of a cylinder body with a second boss portion 205 as a bottom surface, and a peripheral surface of the second rising portion 210 and a peripheral surface of the second boss portion 205 are continuous and are located on the same arc surface. In the embodiment, the second rising portion 210 rises in a roughly perpendicular manner relative to the second boss portion 205. A second bent portion 212 is integrally arranged at one end of the second rising portion 210 away from the battery cell body 201. As shown in FIGs. 5 and 6, when viewed from a side surface, the second bent portion 212 and the second rising portion 210 are a partially cut cylinder as a whole, and the second bent portion 212 has a length less than a contour size of the second boss portion 205.

As shown in FIG. 5 and FIG. 6, a gap is provided between the first bent portion 211 and the first boss portion 204. The gap functions as a space to accommodate the second snap-fit body 207, specifically the second bent portion 212. A space is formed by the second bent portion 212, the second rising portion 210 and the second boss portion 205, and functions as a space to accommodate the first snap-fit body 206, specifically the first bent portion 211.

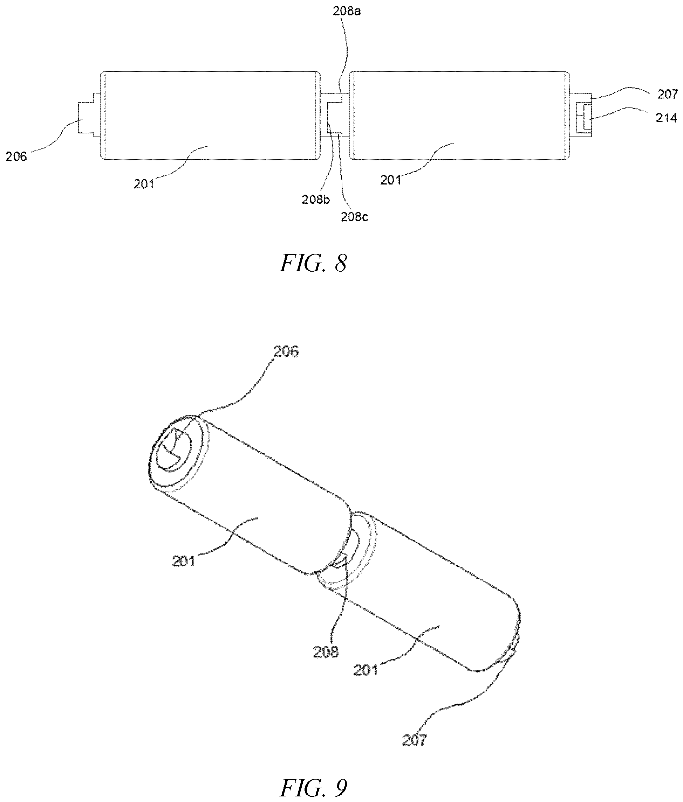

When two adjacent battery cells are snap-fit, specifically, as shown in FIGs. 8 and 9, in a state in which the battery cell on a left side in the figure is connected to the battery cell on a right side by means of the first snap-fit body 206 and the second snap-fit body 207, an anode of the battery cell on the left side is snap-fit to a cathode of the battery cell on the right side to form a battery terminal post connection body. A peripheral surface of the battery terminal post connection body is formed by joining a peripheral surface of the first boss portion 204, a peripheral surface of the second boss portion 205, a peripheral surface of the first snap-fit body 206, and a peripheral surface of the second snap-fit body 207. In the first direction, an end surface of the first bent portion 211 of the first snap-fit body 206 of the battery cell on a right side abuts against an end surface of the second boss portion 205 of the battery cell on a left side, and an end surface of the second bent portion 212 of the second snap-fit body 207 of the battery cell on a left side abuts against an end surface of the first boss portion 204 of the battery cell on a right side, thereby forming tight surface contact in the first direction as well. Moreover, a surface of the first bent portion 211 towards a side of the first boss portion 204 are in surface contact with a surface of the second bent portion 212 towards a side of the second boss portion 205. In addition, the surfaces of the first snap-fit body 206 extending in the first direction are also in surface contact with the surfaces of the second snap-fit body 207 extending in the first direction.

As described above, by means of the first snap-fit body 206 and the second snap-fit body 207 formed above, the cathode and the anode of the adjacent battery cells can be snap-fit to each other in a manner of close surface contact without being easily separated or misaligned. Connection strength between the battery cells can be ensured to some extent even in a state in which welding is not carried out. In addition, a contact area between the terminal post of the cathode and the terminal post of the anode can also be increased.

In any implementation, as shown in FIGs. 5-9, the first rising portion 209 is formed by part of a peripheral wall of a cylindrical body with the first boss portion 204 as a bottom surface, and the second rising portion 210 is formed by a remaining part of the peripheral wall of the cylindrical body.

Thus, the first rising portion, the first boss portion, the second rising portion and the second boss portion after snap-fitting form a cylindrical body together, such that improvement in connection strength is facilitated, and welding of the seam is facilitated.

In any implementation, as shown in FIGs. 6 and 7, the first bent portion 211 and the second bent portion 212 each have a shape of a plate having a uniform thickness.

A thickness of the first bent portion 211 and the second bent portion 212 can be set as required. As an example, the thickness may be set as 1.5 mm. Of course, ends of the first bent portion and the second bent portion may further be conically chamfered, so as to facilitate mounting. Thus, the snap-fit body is easy to process and mount.

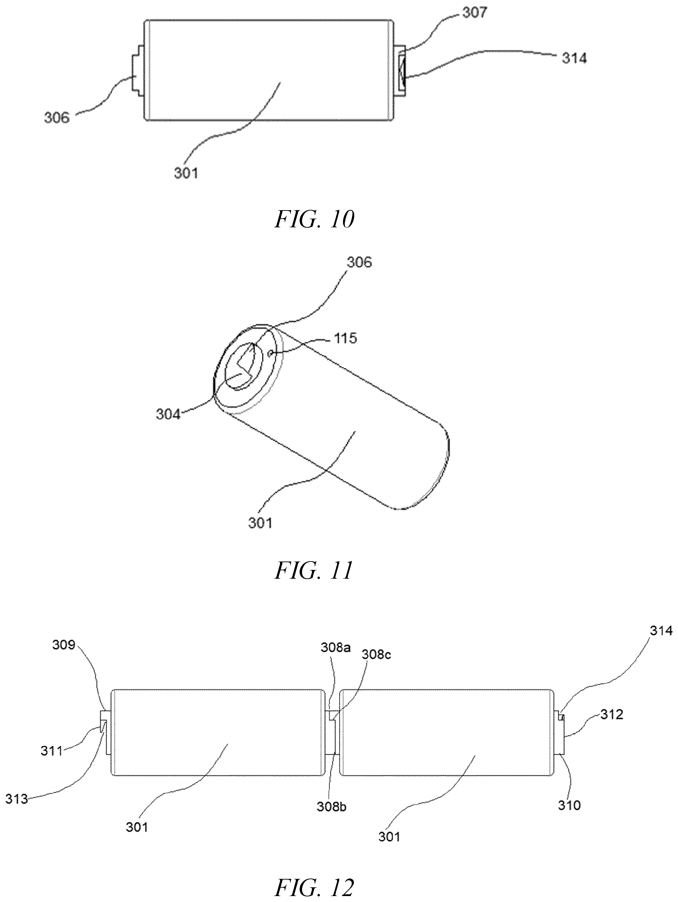

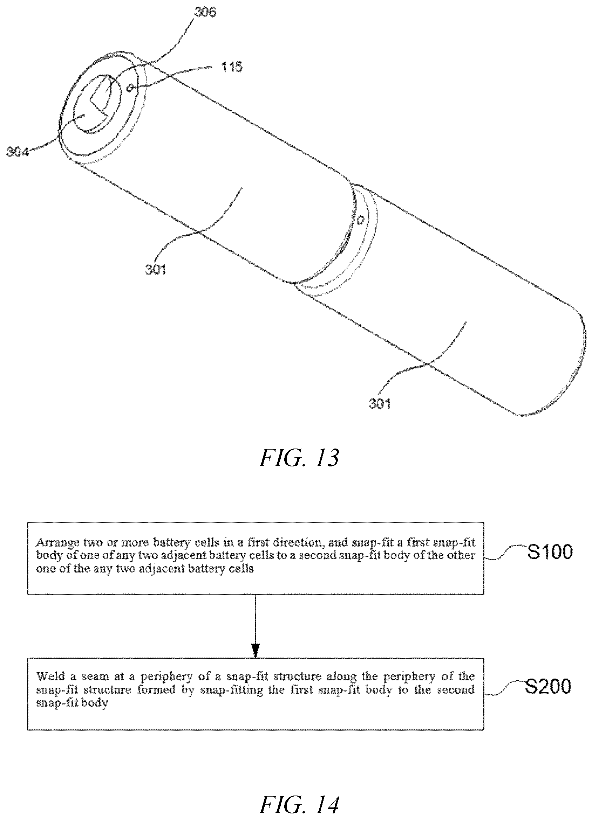

In any implementation, as shown in FIGs. 10-13, the first bent portion 311 is formed as a plate of which a thickness gradually reduces as the first bent portion extends away from the first rising portion 309; and the second bent portion 312 is formed as a plate of which a thickness gradually reduces as the second bent portion extends away from the second rising portion 310.

As shown in FIG. 12, as a particular example, a first bent portion 311 is formed into a shape of a wedge, and has a substantially right-angled triangular cross section when viewed from a side surface as shown in FIG. 12. When the first bent portion 311 is inserted into the second accommodation space of the second snap-fit body, a top surface of the first bent portion 311 is in surface contact with the second boss portion 305, and an inclined surface of the first bent portion 311 and an inclined surface (not shown) of the second bent portion 312 facing the second boss portion 305 match each other to be in surface contact with each other.

Thus, since the first bent portion and the second bent portion are formed into the shape of the plate having a thin end and a thick end, the first bent portion and the second bent portion can be easily snap-fit together without special positioning or guiding when matching each other, and a contact area between the terminal post of the cathode and the terminal post of the anode between the battery cells connected can be further increased.

In any implementation, as shown in FIG. 8 and FIG. 12, in a state in which the first snap-fit body 206, 306 of one of the any two adjacent battery cells is snap-fit to the second snap-fit body 207, 307 of the other one of the any two adjacent battery cells, the first bent portion 211, 311 is inserted into the second accommodation space 214, 314, the second bent portion 212, 312 is inserted into the first accommodation space 213, 313, the first boss portion 204, 304 and the second bent portion 211, 311 are maintained in surface contact with each other, and the second boss portion 205, 305 and the first bent portion 211, 311 are maintained in surface contact with each other.

Thus, in a snap-fit state, the terminal post of the cathode and the terminal post of the anode connected can be in a cylindrical body as a whole, such that subsequent welding is facilitated; and moreover, the terminal post of the cathode and the terminal post of the anode connected have a large contact area such that reliable electrical connection can be ensured, and large overcurrent requirements can be satisfied.

In any implementation, as shown in FIG. 8 and FIG. 12, welding portions formed by welding are arranged at a seam 208a, 308a between the first boss portion 204, 304 and the second snap-fit body 205, 305 and at a seam 208b, 308b between the second boss portion 205, 305 and the first snap-fit body 206, 306.

As shown in FIGs. 8 and 12, the cathode of the battery cell on a left side and the anode of the battery cell on a right side are snap-fit to each other to form a battery terminal post connector, and a seam 208, 308 is formed on the battery terminal post connector. By performing welding along the seam 208, 308, relative locations of the two battery cells may be fixed.

Specifically, the seam 208, 308 includes a seam body 208a, 308a between the first boss portion 204, 304 and the second snap-fit body 205, 305, a seam body 208b, 308b between the second boss portion 205, 305 and the first snap-fit body 206, 306, and a seam body 208c, 308c between the first snap-fit body 206, 306 and the second snap-fit body 207, 307. During welding, only the seam body 208a, 308a and the seam body 208b, 308b may be welded since the seam bodies are in the same circumferential position, no welding tool is needed, or the welded battery moves in the first direction. Moreover, since the snap-fit body has connection strength to some extent, connection strength can be ensured, even if not all the seams 208, 308 are welded. Certainly, the seam body 208c, 308c may also be welded as required.

Thus, it is only necessary to weld peripheries of the terminal post of the cathode and the terminal post of the anode connected in a circumferential direction. Welding operation is simple, and has short time consumption, thereby being conducive to improvement in production efficiency of the battery.

In any implementation, the boss portion, the first snap-fit body and the second snap-fit body is made of at least any one of aluminum metal, copper metal, nickel plated aluminum metal, silver plated aluminum metal, nickel plated copper metal, and silver plated copper metal.

The terminal post of the cathode and the terminal post of the anode including the boss portion and the snap-fit bodies are formed by a material having high conductivity, thereby being conducive to improvement in conductivity and an overcurrent capability of the electrode.

In any implementation, as shown in FIG. 3, FIG. 11 and FIG. 13, two ends of the battery cell body in the first direction are each provided with an explosion-proof valve 115 openable under an action of a pressure of gas inside the battery cell, and the adjacent explosion-proof valves 115 are arranged staggered from each other in location.

Specifically, whether the explosion-proof valve is on a side end surface of a cathode or a side end surface of an anode of the battery cell body 101, 201, 301, the explosion-proof valve 115 may be arranged with reference to the snap-fit body on the end surface, for example. For example, in FIG. 3, the explosion-proof valve 115 on the side end surface of the anode is arranged on a position away from the second snap-fit body 107. Although the explosion-proof valve is not illustrated, the explosion-proof valve 115 on the side end surface of the cathode is arranged on the same side as the first snap-fit body 106. Thus, when a plurality of battery cells are snap-fit to each other, the explosion-proof valve 115 on the end surface of the adjacent battery cell body is always in a staggered location. For example, in FIG. 11, the explosion-proof valve 115 on the side end surface of the cathode is arranged on the same side as the first snap-fit body 306. Although the explosion-proof valve is not shown, the explosion-proof valve 115 on the side end surface of the anode is arranged on the same side as the second snap-fit body 307. Thus, when the plurality of battery cells are snap-fit to each other, the explosion-proof valve 115 on the end surface of the adjacent battery cell body is always in a staggered position.

Since the first snap-fit body and the second snap-fit body are arranged at two ends of the battery cell body, respectively, configuration positions of the explosion-proof valves can be easily determined by using these snap-fit bodies as references, and positions of the explosion-proof valves in the snap-fit state can further be easily figured out. The explosion-proof valves on end surfaces opposite each other in the snap-fit state are in staggered positions such that the situation that one of the explosion-proof valves explodes due to thermal runaway and unintentionally causes the explosion-proof valve located on an opposite side to explode can be avoided.

A second aspect of an embodiment of the present application provides a power consuming device. The power consuming device includes a battery according to the first aspect of the embodiment of the present application.

Since miniaturization and lightweight of the battery can be achieved, miniaturization and lightweight of the power consuming device can also be achieved; and the number of the battery cells in groups can also be easily adjusted according to actual usage. Further, since connection reliability between the battery cells is improved, reliability of the battery and the power consuming device is improved.

A third aspect of an embodiment of the present application provides a method for manufacturing a battery. The battery is a battery according to the first aspect of the embodiment of the present application. The method for manufacturing a battery includes: arranging two or more battery cells 100 (or 200, 300) in a first direction, and snap-fitting a first snap-fit body 106 (or 206, 306) of one of any two adjacent battery cells 100 (or 200, 300) to a second snap-fit body 107 (or 207, 307) of the other one of the any two adjacent battery cells 100 (or 200, 300) (S100); and welding a seam 108 (or 208, 308) at a periphery of a snap-fit structure along the periphery of the snap-fit structure formed by snap-fitting the first snap-fit body 106 (or 206, 306) to the second snap-fit body 107 (or 207, 307) (S200).

Thus, connection strength between the battery cells connected can be ensured. Moreover, even if there are no special steps for checking misalignment or removal of the terminal post of the cathode and the terminal post of the anode in a manufacturing process, welding can be easily carried out. Moreover, since the seam is welded, a welding process is simple.

As an example, a particular embodiment of the present application will be described below.

As shown in FIGs. 2-4, a cathode 102 of a battery cell 100 is provided with a first boss portion 104 and a first snap-fit body 106, and an anode 103 is provided with a second boss portion 105 and a second snap-fit body 107. The first snap-fit body 106 is a shape of a protruding strip having a trapezoidal cross section, and the second snap-fit body 107 is a dovetail-shaped strip groove formed on the second boss portion 105. By snap-fitting the first snap-fit body 106 to the second snap-fit body 107, relative locations of the two battery cells are basically fixed such that a gap between the cathode and the anode caused by separation of the two battery cells in an axial direction can be limited. Welding is performed along the circular seam 108 in a snap-fit state. Thus, due to implementation of butt welding of positive terminal posts and negative terminal posts, a welding area is increased, and a wire welding technology may be used to facilitate welding trajectory addressing and reduce welding difficulty.

As shown in FIGs. 5-13, the cathode of the battery cell 200 (300) is provided with a first boss portion 204 (304) and a first snap-fit body 206 (306). The first snap-fit body 206 (306) is arranged in a rising manner relative to the first boss portion 204 (304) and may be viewed in an L shape from a side surface. The anode of the battery cell 200 (300) is provided with a second boss portion 205 (305) and a first snap-fit body 207 (307). The second snap-fit body 207 (307) are arranged in a rising manner relative to the second boss portion 205 (305), and a recess (second accommodation space) is formed between the second snap-fit body 207 (307) and the second boss portion 205 (305), and part of the first snap-fit body 207 (307) may be inserted into the recess, thereby forming a snap-fit structure.

In addition, explosion-proof valves 115 may be arranged with reference to locations of the first snap-fit body and the second snap-fit body, such that when the battery cells are connected to each other, the explosion-proof valves 115 on adjacent opposite surfaces are in a completely staggered location to ensure that explosion of one explosion-proof valve does not cause unintended explosion of another explosion-proof valve.

What is described above is, for example, suitable for the long-rod-shaped battery grouping solution in large batteries or battery packs. There is no limit to the number of connections, which can be adjusted according to the actual battery pack or a size of the battery. Moreover, compared with the related art, electrical connectors between battery cells are removed such that costs and weight of the battery or the battery pack can be significantly reduced; and moreover, the cathode and the anode between the battery cells can be fully attached together, such that assembly and welding are facilitated.

The above embodiments are exemplary, and those skilled in the art are aware that the above constituent elements can be combined, replaced, or omitted.

## Claims

1. A battery (10), comprising two or more battery cells (100, 200, 300) arranged in a first direction, wherein one of a cathode (102, 202, 302) and an anode (103, 203, 303) of each of the battery cells (100, 200, 300) is configured with a first snap-fit body (106, 206, 306), the other one of the cathode (102, 202, 302) and the anode (103, 203, 303) of each of the battery cells (100, 200, 300) is configured with a second snap-fit body (107, 207, 307),
the first snap-fit body (106, 206, 306) of one of any two adjacent battery cells (100, 200, 300) is snap-fit to the second snap-fit body (107, 207, 307) of the other one of the any two adjacent battery cells (100, 200, 300), and movement of the battery cells (100, 200, 300) connected by snap-fitting the first snap-fit body (106, 206, 306) to the second snap-fit body (107, 207, 307) in the first direction is limited;
wherein
each of the battery cells (100, 200, 300) has a battery cell body (101, 201, 301), and the cathode (102, 202, 302) and the anode (103, 203, 303) arranged at opposite ends of the battery cell body (101, 201, 301), respectively;
**characterized in that**
the cathode (102, 202, 302) and the anode (103, 203, 303) are each configured with a boss portion arranged on the battery cell body (101, 201, 301), the first snap-fit body (106, 206, 306) and the second snap-fit body (107, 207, 307) are integrally connected to the corresponding boss portions, respectively, the boss portion connected to the first snap-fit body (106, 206, 306) is a first boss portion (104, 204, 304), and the boss portion connected to the second snap-fit body (107, 207, 307) is a second boss portion (105, 205, 305).

2. The battery (10) according to claim 1, wherein
the first snap-fit body (106, 206, 306) is formed into a shape of a protruding strip with a cross section formed in a widening manner as the first snap-fit body (106, 206, 306) extends away from the battery cell body (101, 201, 301); and
the second snap-fit body (107, 207, 307) is formed into a shape of a groove capable of being snap-fit to the first snap-fit body (106, 206, 306) in a manner of surface contact.

3. The battery (10) according to claim 2, wherein
in a state in which the first snap-fit body (106, 206, 306) of one of the any two adjacent battery cells (100, 200, 300) is snap-fit to the second snap-fit body (107, 207, 307) of the other one of the any two adjacent battery cells (100, 200, 300), the first boss portion (104, 204, 304) and the second boss portion (105, 205, 305) are maintained in surface contact with each other in a state in which the first snap-fit body (106, 206, 306) is snap-fit to the second snap-fit body (107, 207, 307).

4. The battery (10) according to claim 3, wherein
a welding portion formed by welding is arranged at a seam (108, 208, 308) between the first boss portion (104, 204, 304) and the second boss portion (105, 205, 305).

5. The battery (10) according to claim 1, wherein
the first snap-fit body (106, 206, 306) is formed to have:
a first rising portion (209, 309) arranged in a rising manner relative to the first boss portion (104, 204, 304), one end of the first rising portion (209, 309) being integrally connected to the first boss portion (104, 204, 304); and
a first bent portion (211, 311) arranged at the other end of the first rising portion (209, 309) in a bent manner relative to the first rising portion (209, 309), a first accommodation space (213, 313) into which the second snap-fit body (107, 207, 307) is inserted being formed between the first bent portion (211, 311) and the first boss portion (104, 204, 304); and
the second snap-fit body (107, 207, 307) is formed to have:
a second rising portion (210, 310) arranged in a rising manner relative to the second boss portion (105, 205, 305), one end of the second rising portion (210, 310) being integrally connected to the second boss portion (105, 205, 305); and
a second bent portion (212, 312) arranged at the other end of the second rising portion (210, 310) in a bent manner relative to the second rising portion (210, 310), a second accommodation space (214, 314) into which the first snap-fit body (106, 206, 306) is to be inserted being formed between the second bent portion (212, 312) and the second boss portion (105, 205, 305).

6. The battery (10) according to claim 5, wherein
the first rising portion (209, 309) is formed by part of a peripheral wall of a cylindrical body with the first boss portion (104, 204, 304) as a bottom surface, and the second rising portion (210, 310) is formed by a remaining part of the peripheral wall of the cylindrical body.

7. The battery (10) according to claim 5 or 6, wherein
the first bent portion (211, 311) and the second bent portion (212, 312) each have a shape of a plate having a uniform thickness.

8. The battery (10) according to claim 5 or 6, wherein
the first bent portion (211, 311) is formed as a plate of which a thickness gradually reduces as the first bent portion (211, 311) extends away from the first rising portion (209, 309); and
the second bent portion (212, 312) is formed as a plate of which a thickness gradually reduces as the second bent portion (212, 312) extends away from the second rising portion (210, 310).

9. The battery (10) according to any one of claims 5-8, wherein
in a state in which the first snap-fit body (106, 206, 306) of one of the any two adjacent battery cells (100, 200, 300) is snap-fit to the second snap-fit body (107, 207, 307) of the other one of the any two adjacent battery cells (100, 200, 300), the first bent portion (211, 311) is inserted into the second accommodation space (214, 314), the second bent portion (212, 312) is inserted into the first accommodation space (213, 313),
the first boss portion (104, 204, 304) and the second bent portion (212, 312) are maintained in surface contact with each other, and the second boss portion (105, 205, 305) and the first bent portion (211, 311) are maintained in surface contact with each other.

10. The battery (10) according to claim 9, wherein
welding portions formed by welding are arranged at a seam (108, 208, 308) between the first boss portion (104, 204, 304) and the second snap-fit body (107, 207, 307) and at a seam (108, 208, 308) between the second boss portion (105, 205, 305) and the first snap-fit body (106, 206, 306).

11. The battery (10) according to any one of claims 1-10, wherein
the boss portion, the first snap-fit body (106, 206, 306) and the second snap-fit body (107, 207, 307) is made of at least any one of aluminum metal, copper metal, nickel plated aluminum metal, silver plated aluminum metal, nickel plated copper metal, and silver plated copper metal.

12. The battery (10) according to any one of claims 1-11, wherein
two ends of the battery cell body (101, 201, 301) in the first direction are each provided with an explosion-proof valve (115) openable under an action of a pressure of gas inside the battery cell (100, 200, 300), and the adjacent explosion-proof valves (115) are arranged staggered from each other in location.

13. A method for manufacturing a battery (10) according to any one of claims 1-12, comprising:
arranging two or more battery cells (100, 200, 300) in a first direction, and snap-fitting a first snap-fit body (106, 206, 306) of one of any two adjacent battery cells (100, 200, 300) to a second snap-fit body (107, 207, 307) of the other one of the any two adjacent battery cells (100, 200, 300); and
welding a seam (108, 208, 308) at a periphery of a snap-fit structure along the periphery of the snap-fit structure formed by snap-fitting the first snap-fit body (106, 206, 306) to the second snap-fit body (107, 207, 307).

## Patentansprüche

1. Batterie (10) mit zwei oder mehr Batteriezellen (100, 200, 300), die in einer ersten Richtung angeordnet sind, wobei entweder eine Kathode (102, 202, 302) oder eine Anode (103, 203, 303) jeder der Batteriezellen (100, 200, 300) mit einem ersten Schnappverschlusskörper (106, 206, 306) konfiguriert ist, wobei die jeweils andere Kathode (102, 202, 302) oder Anode (103, 203, 303) jeder der Batteriezellen (100, 200, 300) mit einem zweiten Schnappverschlusskörper (107, 207, 307) konfiguriert ist,
der erste Schnappverschlusskörper (106, 206, 306) einer von zwei benachbarten Batteriezellen (100, 200, 300) mit dem zweiten Schnappverschlusskörper (107, 207, 307) der anderen der zwei beliebigen benachbarten Batteriezellen (100, 200, 300) schnappverbunden ist, und die Bewegung der Batteriezellen (100, 200, 300), die durch Verschnappen des ersten Schnappverschlusskörpers (106, 206, 306) mit dem zweiten Schnappverschlusskörper (107, 207, 307) verbunden sind, in der ersten Richtung begrenzt ist;
wobei
jede der Batteriezellen (100, 200, 300) einen Batteriezellenkörper (101, 201, 301) aufweist, und die Kathode (102, 202, 302) und die Anode (103, 203, 303) jeweils an gegenüberliegenden Enden des Batteriezellenkörpers (101, 201, 301) angeordnet sind;
wobei
die Kathode (102, 202, 302) und die Anode (103, 203, 303) jeweils mit einem auf dem Batteriezellenkörper (101, 201, 301) angeordneten Vorsprungsteil konfiguriert sind, wobei der erste Schnappverschlusskörper (106, 206, 306) und der zweite Schnappverschlusskörper (107, 207, 307) einstückig mit den entsprechenden Vorsprungsteilen verbunden sind, wobei der mit dem ersten Schnappverschlusskörper (106, 206, 306) verbundene Vorsprungsteil ein erster Vorsprungsteil (104, 204, 304) ist und der mit dem zweiten Schnappverschlusskörper (107, 207, 307) verbundene Vorsprungsteil ein zweiter Vorsprungsteil (105, 205, 305) ist.

2. Batterie (10) nach Anspruch 1, wobei
der erste Schnappverschlusskörper (106, 206, 306) in Form eines vorstehenden Streifens mit einem Querschnitt ausgebildet ist, der sich verbreitert, wenn sich der erste Schnappverschlusskörper (106, 206, 306) von dem Batteriezellenkörper (101, 201, 301) weg erstreckt; und
der zweite Schnappverschlusskörper (107, 207, 307) in die Form einer Nut geformt ist, die in den ersten Schnappverschlusskörper (106, 206, 306) in einer Art Oberflächenkontakt einschnappbar ist.

3. Batterie (10) nach Anspruch 2, wobei
in einem Zustand, in dem der erste Schnappverschlusskörper (106, 206, 306) einer der zwei beliebigen benachbarten Batteriezellen (100, 200, 300) mit dem zweiten Schnappverschlusskörper (107, 207, 307) der anderen der zwei beliebigen benachbarten Batteriezellen (100, 200, 300) schnappverbunden ist, der erste Vorsprungsteil (104, 204, 304) und der zweite Vorsprungsteil (105, 205, 305) in einem Oberflächenkontakt miteinander in einem Zustand gehalten werden, in dem der erste Schnappverschlusskörper (106, 206, 306) in den zweiten Schnappverschlusskörper (107, 207, 307) eingerastet ist.

4. Batterie (10) nach Anspruch 3, wobei
ein durch Schweißen gebildeter Schweißabschnitt an einer Naht (108, 208, 308) zwischen dem ersten Vorsprungsteil (104, 204, 304) und dem zweiten Vorsprungsteil (105, 205, 305) angeordnet ist.

5. Batterie (10) nach Anspruch 1, wobei
der erste Schnappverschlusskörper (106, 206, 306) dazu ausgebildet ist, Folgendes aufzuweisen:
einen ersten ansteigenden Abschnitt (209, 309), der relativ zu dem ersten Vorsprungsteil (104, 204, 304) ansteigend angeordnet ist, wobei ein Ende des ersten ansteigenden Abschnitts (209, 309) einstückig mit dem ersten Vorsprungsteil (104, 204, 304) verbunden ist; und
einen ersten gebogenen Abschnitt (211, 311), der an dem anderen Ende des ersten ansteigenden Abschnitts (209, 309) in einer gebogenen Weise relativ zu dem ersten ansteigenden Abschnitt (209, 309) angeordnet ist, wobei ein erster Aufnahmeraum (213, 313), in den der zweite Schnappverschlusskörper (107, 207, 307) eingeführt ist, zwischen dem ersten gebogenen Abschnitt (211, 311) und dem ersten Vorsprungsteil (104, 204, 304) ausgebildet ist; und
der zweite Schnappverschlusskörper (107, 207, 307) dazu ausgebildet ist, Folgendes aufzuweisen:
einen zweiten ansteigenden Abschnitt (210, 310), der in einer ansteigenden Weise relativ zu dem zweiten Vorsprungsteil (105, 205, 305) angeordnet ist, wobei ein Ende des zweiten ansteigenden Abschnitts (210, 310) einstückig mit dem zweiten Vorsprungsteil (105, 205, 305) verbunden ist; und
einen zweiten gebogenen Abschnitt (212, 312), der an dem anderen Ende des zweiten ansteigenden Abschnitts (210, 310) in einer gebogenen Weise relativ zu dem zweiten ansteigenden Abschnitt (210, 310) angeordnet ist, wobei ein zweiter Aufnahmeraum (214, 314), in den der erste Schnappverschlusskörper (106, 206, 306) einzuführen ist, zwischen dem zweiten gebogenen Abschnitt (212, 312) und dem zweiten Vorsprungsteil (105, 205, 305) gebildet ist.

6. Batterie (10) nach Anspruch 5, wobei
der erste ansteigende Abschnitt (209, 309) durch einen Teil einer Umfangswand eines zylindrischen Körpers mit dem ersten Vorsprungsteil (104, 204, 304) als Bodenfläche gebildet wird und der zweite ansteigende Abschnitt (210, 310) durch einen verbleibenden Teil der Umfangswand des zylindrischen Körpers gebildet wird.

7. Batterie (10) nach Anspruch 5 oder 6, wobei
der erste gebogene Abschnitt (211, 311) und der zweite gebogene Abschnitt (212, 312) jeweils die Form einer Platte mit einer gleichmäßigen Dicke haben.

8. Batterie (10) nach Anspruch 5 oder 6, wobei
der erste gebogene Abschnitt (211, 311) als eine Platte ausgebildet ist, deren Dicke allmählich abnimmt, wenn sich der erste gebogene Abschnitt (211, 311) von dem ersten ansteigenden Abschnitt (209, 309) weg erstreckt; und der zweite gebogene Abschnitt (212, 312) als eine Platte ausgebildet ist, deren Dicke allmählich abnimmt, wenn sich der zweite gebogene Abschnitt (212, 312) von dem zweiten ansteigenden Abschnitt (210, 310) weg erstreckt.

9. Batterie (10) nach einem der Ansprüche 5-8, wobei
in einem Zustand, in dem der erste Schnappverschlusskörper (106, 206, 306) einer der zwei beliebigen benachbarten Batteriezellen (100, 200, 300) mit dem zweiten Schnappverschlusskörper (107, 207, 307) der anderen der zwei beliebigen benachbarten Batteriezellen (100, 200, 300) schnappverbunden ist, der erste gebogene Abschnitt (211, 311) in den zweiten Aufnahmeraum (214, 314) eingesetzt ist, der zweite gebogene Abschnitt (212, 312) in den ersten Aufnahmeraum (213, 313) eingesetzt ist,
der erste Vorsprungsteil (104, 204, 304) und der zweite gebogene Abschnitt (212, 312) in Oberflächenkontakt miteinander gehalten werden, und der zweite Vorsprungsteil (105, 205, 305) und der erste gebogene Abschnitt (211, 311) in Oberflächenkontakt miteinander gehalten werden.

10. Batterie (10) nach Anspruch 9, wobei
durch Schweißen gebildete Schweißabschnitte an einer Naht (108, 208, 308) zwischen dem ersten Vorsprungsteil (104, 204, 304) und dem zweiten Schnappverschlusskörper (107, 207, 307) und an einer Naht (108, 208, 308) zwischen dem zweiten Vorsprungsteil (105, 205, 305) und dem ersten Schnappverschlusskörper (106, 206, 306) angeordnet sind.

11. Batterie (10) nach einem der Ansprüche 1-10, wobei
der Vorsprungsteil, der erste Schnappverschlusskörper (106, 206, 306) und der zweite Schnappverschlusskörper (107, 207, 307) aus mindestens einem von Aluminiummetall, Kupfermetall, vernickeltem Aluminiummetall, versilbertem Aluminiummetall, vernickeltem Kupfermetall und versilbertem Kupfermetall hergestellt ist.

12. Batterie (10) nach einem der Ansprüche 1-11, wobei
zwei Enden des Batteriezellenkörpers (101, 201, 301) in der ersten Richtung jeweils mit einem explosionssicheren Ventil (115) versehen sind, das dazu ausgebildet ist, unter der Einwirkung eines Gasdrucks im Inneren der Batteriezelle (100, 200, 300) geöffnet zu werden, und die benachbarten explosionssicheren Ventile (115) örtlich versetzt zueinander angeordnet sind.

13. Verfahren zur Herstellung einer Batterie (10) nach einem der Ansprüche 1-12,
umfassend:
Anordnen von zwei oder mehr Batteriezellen (100, 200, 300) in einer ersten Richtung und Schnappverbinden eines ersten Schnappverschlusskörper (106, 206, 306) von einer von zwei beliebigen benachbarten Batteriezellen (100, 200, 300) in einen zweiten Schnappverschlusskörper (107, 207, 307) der anderen der zwei beliebigen benachbarten Batteriezellen (100, 200, 300); und
Schweißen einer Naht (108, 208, 308) an einer Peripherie einer Schnappverschlussstruktur entlang der Peripherie der Schnappverschlussstruktur, die durch Schnappverbinden des ersten Schnappverschlusskörper (106, 206, 306) an den zweiten Schnappverschlusskörper (107, 207, 307) gebildet wird.

## Revendications

1. Batterie (10), comprenant deux ou plusieurs cellules de batterie (100, 200, 300) disposées dans une première direction, dans laquelle l'une parmi une cathode (102, 202, 302) et une anode (103, 203, 303) de chacune des cellules de batterie (100, 200, 300) est configurée avec un premier corps à encliquetage (106, 206, 306), l'autre parmi la cathode (102, 202, 302) et l'anode (103, 203, 303) de chacune des cellules de batterie (100, 200, 300) est configurée avec un deuxième corps à encliquetage (107, 207, 307),
le premier corps à encliquetage (106, 206, 306) de l'une des deux cellules de batterie adjacentes (100, 200, 300) est encliqueté sur le deuxième corps à encliquetage (107, 207, 307) de l'autre des deux cellules de batterie adjacentes (100, 200, 300), et le mouvement des cellules de la batterie (100, 200, 300), connectant par encliquetage, le premier corps à encliquetage (106, 206, 306) avec deuxième corps à encliquetage (107, 207, 307) dans la première direction, est limitée;
dans laquelle
chacune des cellules de batterie (100, 200, 300) comporte un corps de cellule de batterie (101, 201, 301), et la cathode (102, 202, 302) et l'anode (103, 203, 303) sont disposées respectivement au niveau des extrémités opposées du corps de cellule de batterie (101, 201, 301);
**caractérisée en ce que**
la cathode (102, 202, 302) et l'anode (103,203, 303) sont chacune configurées avec une partie de bossage disposée sur le corps de cellule de batterie (101, 201, 301), le premier corps à encliquetage (106, 206, 306) et le deuxième corps à encliquetage (107, 207, 307) sont connectés d'un seul tenant aux parties de bossage correspondantes, respectivement, la partie de bossage connectée au premier corps à encliquetage (106, 206, 306) est une première partie de bossage (104, 204, 304), et la partie de bossage connectée au deuxième corps à encliquetage (107, 207, 307) est une deuxième partie de bossage (105, 205, 305).

2. Batterie (10) selon la revendication 1, dans laquelle
le premier corps à encliquetage (106, 206, 306) est formé sous une forme de bande saillante avec une section transversale formée de manière à s'élargir lorsque le premier corps à encliquetage (106, 206, 306) s'étend en s'éloignant du corps de cellule de batterie (101, 201, 301); et
le deuxième corps à encliquetage (107, 207, 307) est formé sous une forme de rainure capable d'être encliquetée sur le premier corps à encliquetage (106, 206, 306) de manière à être en contact avec la surface.

3. Batterie (10) selon la revendication 2, dans laquelle
dans un état dans lequel le premier corps à encliquetage (106, 206, 306) de l'une des deux cellules de batterie adjacentes (100, 200, 300) est encliqueté sur le deuxième corps à encliquetage (107, 207, 307) de l'autre des deux cellules de batterie adjacentes (100, 200, 300), la première partie de bossage (104, 204, 304) et la deuxième partie de bossage (105, 205, 305) sont maintenues en contact de surface l'une avec l'autre dans un état dans lequel le premier corps à encliquetage (106, 206, 306) est encliqueté sur le deuxième corps à encliquetage (107, 207, 307).

4. Batterie (10) selon la revendication 3, dans laquelle
une partie soudée formée par soudage est disposée au niveau d'une jonction (108, 208, 308) entre la première partie de bossage (104, 204, 304) et la deuxième partie de bossage (105, 205, 305).

5. Batterie (10) selon la revendication 1, dans laquelle
le premier corps à encliquetage (106, 206, 306) est formé pour avoir:
une première partie montante (209, 309) disposée de manière ascendante par rapport à la première partie de bossage (104, 204, 304), une extrémité de la première partie montante (209, 309) étant intégralement reliée à la première partie de bossage (104, 204, 304); et
une première partie courbée (211, 311) disposée à l'autre extrémité de la première partie montante (209, 309) de manière courbée par rapport à la première partie montante (209, 309), un premier espace de logement (213, 313) dans lequel le deuxième corps à encliquetage (107, 207, 307) est inséré étant formé entre la première partie courbée (211, 311) et la première partie de bossage (104, 204, 304); et
le deuxième corps à encliquetage (107, 207, 307) est formé pour avoir:
une deuxième partie montante (210, 310) disposée de manière ascendante par rapport à la deuxième partie de bossage (105, 205, 305), une extrémité de la deuxième partie montante (210, 310) étant intégralement reliée à la deuxième partie de bossage (105, 205, 305); et
une deuxième partie courbée (212, 312) disposée à l'autre extrémité de la deuxième partie montante (210, 310) de manière courbée par rapport à la deuxième partie montante (210, 310), un deuxième espace de logement (214, 314) dans lequel le premier corps à encliquetage (106, 206, 306) doit être inséré étant formé entre la deuxième partie courbée (212, 312) et la deuxième partie de bossage (105, 205, 305).

6. Batterie (10) selon la revendication 5, dans laquelle
la première partie montante (209, 309) est formée par une partie d'une paroi périphérique d'un corps cylindrique avec la première partie de bossage (104, 204, 304) comme surface inférieure, et la deuxième partie montante (210, 310) est formée par une partie restante de la paroi périphérique du corps cylindrique.

7. Batterie (10) selon la revendication 5 ou 6, dans laquelle
la première partie courbée (211, 311) et la deuxième partie courbée (212, 312) ont chacune la forme d'une plaque présentant une épaisseur uniforme.

8. Batterie (10) selon la revendication 5 ou 6, dans laquelle
la première partie courbée (211, 311) est formée comme une plaque dont l'épaisseur diminue progressivement à mesure que la première partie courbée (211, 311) s'étend en s'éloignant de la première partie montante (209, 309); et
la deuxième partie courbée (212, 312) est formée comme une plaque dont l'épaisseur diminue progressivement à mesure que la deuxième partie courbée (212, 312) s'étend en s'éloignant de la deuxième partie montante (210, 310).

9. Batterie (10) selon l'une quelconque des revendications 5 à 8, dans laquelle
dans un état dans lequel le premier corps (106, 206, 306) de l'une des deux cellules de batterie adjacentes (100, 200, 300) est encliqueté sur le deuxième corps à encliquetage (107, 207, 307) de l'autre des deux cellules de batterie adjacentes (100, 200, 300), la première partie courbée (211, 311) est insérée dans le deuxième espace de logement (214, 314), la deuxième partie courbée (212, 312) est insérée dans le premier espace de logement (213, 313),
la première partie de bossage (104, 204, 304) et la deuxième partie courbée (212, 312) sont maintenues en contact de surface l'une avec l'autre, et la deuxième partie de bossage (105, 205, 305) et la première partie courbée (211, 311) sont maintenues en contact de surface l'une avec l'autre.

10. Batterie (10) selon la revendication 9, dans laquelle
les parties soudées formées par soudage sont disposées au niveau d'une jonction (108, 208, 308) entre la première partie de bossage (104, 204, 304) et le deuxième corps à encliquetage (107, 207, 307) et au niveau d'une jonction (108, 208, 308) entre la deuxième partie de bossage (105, 205, 305) et le premier corps à encliquetage (106, 206, 306).

11. Batterie (10) selon l'une quelconque des revendications 1 à 10, dans laquelle
la partie de bossage, le premier corps à encliquetage (106, 206, 306) et le deuxième corps à encliquetage (107, 207, 307) sont constitués d'au moins l'un des matériaux suivants: aluminium métallique, cuivre métallique, aluminium métallique nickelé, aluminium métallique argenté, cuivre métallique nickelé, et cuivre métallique argenté.

12. Batterie (10) selon l'une quelconque des revendications 1 à 11, dans laquelle
les deux extrémités du corps de cellule de batterie (101, 201, 301) dans la première direction sont chacune pourvues d'une soupape antidéflagrante (115) pouvant s'ouvrir sous l'action d'une pression de gaz à l'intérieur de la cellule de batterie (100, 200, 300), et les soupapes antidéflagrantes adjacentes (115) sont disposées en quinconce les unes par rapport aux autres en termes d'emplacement.

13. Procédé de fabrication d'une batterie (10) selon l'une quelconque des revendications 1 à 12, comprenant:
la disposition de deux ou plusieurs cellules de batterie (100, 200, 300) dans une première direction, et l'encliquetage d'un premier corps à encliquetage (106, 206, 306) de l'une des deux cellules de batterie adjacentes (100, 200, 300) avec un deuxième corps à encliquetage (107, 207, 307) de l'autre des deux cellules de batterie adjacentes (100, 200, 300); et
le soudage d'une jonction (108, 208, 308) à la périphérie d'une structure à encliquetage le long de la périphérie de la structure à encliquetage formée par l'encliquetage du premier corps à encliquetage (106, 206, 306) avec le deuxième corps à encliquetage (107, 207, 307).
